# EUROPÄISCHE PATENTANMELDUNG

(11) **EP 1 028 591 A2**
(43) Veröffentlichungstag der Anmeldung: **16.08.2000**
(21) Anmeldenummer: 00440027.1
(22) Anmeldetag: 31.01.2000
(51) Int. Cl.: H04N 7/173, H04N 7/16

(54) **Verfahren zur digitalen Übertragung von komprimierten Fernsehsignalen**

(30) Priorität: 12.02.1999 DE 19905843
(71) Anmelder: ALCATEL, 75008 Paris (FR)
(72) Erfinder: Schmidt, Thomas, 73773 Aichwald (DE)
(74) Vertreter: Giebel, Marion

(57) **Zusammenfassung**

Die Erfindung betrifft ein Verfahren zur digitalen Übertragung von komprimierten Fernsehsignalen auf ein Fernsehgerät eines Zuschauers, wobei sich Informationsdatenpakete mit Werbedatenpaketen abwechseln. Um den Inhalt der Werbedatenpakete gezielt auf bestimmt Zielgruppen der Zuschauer abstimmen zu können, schlägt die Erfindung vor, daß bestimmte Werbedatenpakete in Abhängigkeit von einem Zielgruppenschlüssel, der von dem Zuschauer abhängig ist, ausgewählt und auf dem Fernsehgerät dargestellt werden.

## Beschreibung

Die vorliegende Erfindung betrifft ein Verfahren zur digitalen Übertragung von komprimierten Fernsehsignalen auf ein Fernsehgerät eines Zuschauers, wobei sich Informationsdatenpakete mit Werbedatenpaketen abwechseln.

Die Erfindung betrifft außerdem einen Decoder zum Dekomprimieren komprimierter Fernsehsignale, so daß sie auf einem Fernsehgerät eines Zuschauers darstellbar sind, wobei sich Informationsdatenpakete mit Werbedatenpaketen abwechseln.

Schließlich betrifft die Erfindung eine Speicherkarte mit einem Speicherelement, für einen Decoder zum Dekomprimieren komprimierter Fernsehsignale, so daß sie auf einem Fernsehgerät eines Zuschauers darstellbar sind, wobei sich Informationsdatenpakete mit Werbedatenpaketen abwechseln.

Verfahren der eingangs genannten Art sind aus dem Stand der Technik bekannt. Die zu übertragenden Fernsehsignale werden zunächst digitalisiert. Die digitalisierten Daten werden in Datenpakete unterteilt und dann übermittelt. Durch die Unterteilung der digitalisierten Daten ist es möglich, mittels Multiplexverfahren die Fernsehsignale von mehreren Fernsehsendungen über einen Kanal zu übermitteln. Um die Übertragungsrate der zu übertragenden digitalisierten Daten erhöhen zu können, werden die Daten vor der Übertragung komprimiert. Aus dem Stand der Technik sind verschiedene Komprimierungsverfahren bekannt. Der Zuschauer verfügt über eine entsprechende Vorrichtung, um die komprimierten Daten dekomprimieren zu können. Es ist des weiteren bekannt, die zu übertragenden Fernsehsignale zu verschlüsseln, um die Ausstrahlung gezielt auf eine bestimmte Zuschauergruppe einschränken zu können. Nur diejenigen Zuschauer können das verschlüsselte Fernsehsignal empfangen, die über eine entsprechende Vorrichtung zum Entschlüsseln der verschlüsselten Daten verfügen. Die Vorrichtung zum Dekomprimieren der komprimierten Daten und die Vorrichtung zum Entschlüsseln der verschlüsselten Daten sind üblicherweise in einem Decoder enthalten. Zur Aktivierung der Vorrichtung zum Entschlüsslen der verschlüsselten Daten dient nach dem Stand der Technik bspw. eine Speicherkarte, auf deren Speicherelement ein bestimmter Code zum zeitlich begrenzten Freischalten der Entschlüsselungsvorrichtung enthalten ist.

Die digitalen Fernsehsignale enthalten Informationsdatenpakete und Werbedatenpakete, die abwechselnd übertragen werden. Die Informationsdatenpakete enthalten die Daten der eigentlichen Fernsehsendung, und die Werbedatenpakete enthalten die Daten einer Werbesendung oder von Werbespots, die während einer Unterbrechung der eigentlichen Fernsehsendung gezeigt werden. Die Zuschauer können anhand ihres Alters, ihres Familienstandes, und/oder ihres Berufes in Zielgruppen unterteilt werden. Der Inhalt der Werbedatenpakete ist üblicherweise für alle Zuschauer gleich gestaltet und spricht den einzelnen Zuschauer in Abhängigkeit von der Zielgruppe, der er angehört, mehr oder weniger an. Die Zuschauer werden dann von dem Inhalt der Werbedatenpakete besonders gut angesprochen, wenn die beworbenen Waren oder Dienstleistungen mit den Konsumbedürfnissen der Zuschauer weitgehend übereinstimmen. Zwar ist es denkbar, diese Übereinstimmung durch Ausstrahlung der Werbedatenpakete in Fernsehsendungen mit einem bestimmten Inhalt oder zu bestimmten Zeiten zu erhöhen. Eine weitergehende Beeinflussung der Übereinstimmung ist bei der Ausstrahlung von Fernsehsignalen, die an alle Zuschauer und damit nicht an eine bestimmte ausgewählte Zuschauergruppe gerichtet sind, nach dem Stand der Technik jedoch nicht möglich.

Deshalb ist es eine Aufgabe der vorliegenden Erfindung, ein Verfahren der eingangs genannten Art dahingehend auszugestalten und weiterzubilden, daß der auf dem Fernsehgerät eines Zuschauers gezeigte Inhalt der Werbedatenpakete gezielt auf die Konsumbedürfnisse des Zuschauers abgestimmt werden kann.

Zur Lösung dieser Aufgabe schlägt die Erfindung ausgehend von dem Verfahren der eingangs genannten Art vor, daß bestimmte Werbedatenpakete in Abhängigkeit von einem Zielgruppenschlüssel, der von dem Zuschauer abhängig ist, ausgewählt und auf dem Fernsehgerät dargestellt werden.

Bei dem erfindungsgemäßen Verfahren kann eine besonders hohe Übereinstimmung von den in den Werbedatenpaketen beworbenen Waren und Dienstleistungen mit den Konsumbedürfnissen des Zuschauers erzielt werden. Jeder Zuschauer bekommt nur den Inhalt der Werbedatenpakete zu sehen, die für ihn nach seinem Zielgruppenschlüssel zu urteilen auch von Interesse sind. Obwohl es sich bei dem erfindungsgemäßen Verfahren nach wie vor um eine Übertragung von Fernsehsignalen handelt, die an alle Zuschauer und damit nicht an eine bestimmte Zuschauergruppe gerichtet ist, können dem einzelnen Zuschauer exakt die Werbedatenpakete individuell zugeführt werden, deren Inhalte dem jeweiligen Zielgruppenschlüssel, dem er angehört, angepaßt sind.

Realisiert wird das erfindungsgemäße Verfahren dadurch, daß die Werbedatenpakete mehrere Werbedatenpaketgruppen umfassen, die jeweils einem Zielgruppenschlüssel zugeordnet sind. Dem einzelnen Zuschauer wird im Rahmen der Werbesendung nur der Inhalt der Werbedatenpaketgruppe gezeigt, die seinem Zielgruppenschlüssel zugeordnet ist. Die anderen übertragenen Werbedatenpaketgruppen bleiben für diesen Zuschauer unberücksichtigt.

Grundsätzlich ist das erfindungsgemäße Verfahren für jedes digitale Übertragungsmedium (DVB, Internet, digitale Kabelnetze) verwendbar, in dem sich einzelne Datenpakete über ihre Packet Identifier (PID, eine Art von Adress-Kopf) individuell markieren lassen, um sie dann von einem Decoder, der ohnehin zum Dekomprimieren der allgemeinen Ausstrahlung eingesetzt wird, selektiv den Zuschauern mit den relevanten Zielgruppenschlüsseln zuzuführen und an ihrem Sichtgerät (Fernseher, Monitor, etc.) anzuzeigen. Gemäß einer vorteilhaften Weiterbildung der vorliegenden Erfindung werden die Fernsehsignale nach einem Komprimierungsverfahren komprimiert, das Packet Identifiers (PIDs) benutzt. Vorzugsweise werden die Fernsehsignale nach dem Moving-Picture-Expert-Group-2 (MPEG2)-Verfahren komprimiert. Dieses Komprimierungsverfahren erlaubt eine hohe Komprimierungsrate, insbesondere von bewegten Bildern, ohne großen Qualitätsverlust.

Gemäß einer bevorzugten Ausführungsform der Erfindung wird vorgeschlagen, daß der Zielgrupppenschlüssel in einem Decoder zum Dekomprimieren der komprimierten Fernsehsignale eingegeben wird. Vorzugsweise wird der Zielgruppenschlüssel von dem Zuschauer über eine Tastatur in den Decoder eingegeben. Es ist denkbar, daß die Tastatur mit Symbolen beschriftet ist, die für die einzelnen Zielgruppen stehen. Durch Drücken einer der Tasten wird dem Zuschauer der jeweiligen Zielgruppenschlüssel zugeordnet.

Alternativ wird vorgeschlagen, daß der Zielgruppenschlüssel auf dem Speicherelement einer Speicherkarte gespeichert ist, und der Zielgruppenschlüssel durch Einlesen des Inhalts des Speicherelements in den Decoder eingegeben wird. Der Inhalt kann bspw. dadurch eingelesen werden, daß die Speicherkarte in einen Aufnahmeschlitz des Decoders eingesteckt und der Inhalt des Speicherelements durch eine entsprechende Leseeinrichtung des Decoders in einen Speicher des Decoders eingelesen wird. Es wäre denkbar, daß Decoder, die mit einer solchen Speicherkarte verkauft werden, von der werbenden Industrie aus einem Teil der zusätzlichen Einnahmen aufgrund der besonders effektiven Werbung oder von den Sendeanstalten aus einem Teil der zusätzlichen Einnahmen aufgrund der höheren Werbeeinnahmen subventioniert werden. Durch die gesenkten Verkaufspreise der Decoder könnte die digitale Empfangstechnik stärker verbreitet werden.

Eine weitere Aufgabe der vorliegende Erfindung besteht darin, einen Decoder der eingangs genannten Art dahingehend auszugestalten und weiterzubilden, daß der auf dem Fernsehgerät eines Zuschauers gezeigte Inhalt der Werbedatenpakete gezielt auf die Konsumbedürfnisse des Zuschauers abgestimmt werden kann.

Zur Lösung dieser Aufgabe schlägt die Erfindung ausgehend von dem Decoder der eingangs genannten Art vor, daß in dem Decoder ein Zielgruppenschlüssel gespeichert ist, der abhängig ist von dem Zuschauer, und daß bestimmte Werbedatenpakete in Abhängigkeit von dem Zielgruppenschlüssel auswählbar und auf dem Fernsehgerät darstellbar sind.

Der Decoder gemäß der Erfindung ist um die Fähigkeit erweitert worden, beim Empfang von Werbedatenpaketen diese anhand der Zielgruppenschlüssel auszusortieren und dem Zuschauer ausgewählte Werbedatenpakete auf dem Fernsehgerät selektiv darzustellen. Die sonstige Funktion des Dekoders, insbesondere die Dekomprimierung der übertragenen Fersehsignale, bleibt von dieser zusätzlichen Fähigkeit unberührt. In dem Decoder ist bspw. eine interne Datenzuordnungstabelle enthalten, die dem eingestellten/abgespeicherten Zielgruppenschlüssel bestimmte Werbedatenpakete zuweist, wenn sie die passenden PIDs aufweisen. Nur solche Werbedatenpakete werden dann auf dem Fernsehgerät des Zuschauers dargestellt.

Durch den Einsatz des erfindungsgemäßen Decoders ist es erstmals möglich, Fernsehsignale auszusenden, die für alle Zuschauer, also nicht nur für eine bestimmte Zuschauergruppe, bestimmt sind, und den einzelnen Zuschauer dennoch gezielt anzusprechen. Mit dem erfindungsgemäßen Decoder kann dem einzelnen Zuschauer der Inhalt gezielt nur von denjenigen Werbedatenpaketgruppen gezeigt werden, die dem Zielgruppenschlüssel zugeordnet sind, dem der entsprechende Zuschauer angehört, ohne daß der Charakter der übergeordneten Sendung (Ausstrahlung) antasten zu müssen. Dadurch kann die Effektivität der Werbesendungen entscheidend verbessert werden, da die beworbenen Waren und Dienstleistungen idealerweise auf die Bedürfnisse der einzelnen Zuschauer ausgerichtet sind.

Je detaillierter der Zielgruppenschlüssel unterteilt ist, desto besser können die Waren und Dienstleistungen auf die Konsumbedürfnisse der Zuschauer abgestimmt werden. Deshalb wird nach einer vorteilhaften Weiterbildung der Erfindung vorgeschlagen, daß der Zielgruppenschlüssel in Zielgruppenprofile unterteilt ist. Die Zielgruppenschlüssel sind vorteilhafterweise in einen öffentlichen Teil und in einen geschützten Teil unterteilt. In dem öffentlichen Teil sind vorzugsweise datenschutzrechtlich unbedenkliche Angaben über den Zuschauer gespeichert. Diese Angaben umfassen bspw. den Namen, die Anschrift, das Geschlecht, das Alter und/oder den Familienstand des Zuschauers. In dem geschützten Teil sind vorzugsweise datenschutzrechtlich geschützte Angaben über den Zuschauer gespeichert. Diese Angaben umfassen bspw. das verfügbare Jahreseinkommen, besondere medizinische Bedürfnisse, bestimmte Vorlieben oder Gewohnheiten oder andere Angaben über den betreffenden Zuschauer, die nicht jedermann zugänglich sind.

Es ist schließlich eine Aufgabe der vorliegende Erfindung, eine Speicherkarte der eingangs genannten Art dahingehend auszugestalten und weiterzubilden, daß der auf dem Fernsehgerät eines Zuschauers gezeigte Inhalt der Werbedatenpakete gezielt auf die Konsumbedürfnisse des Zuschauers abgestimmt werden kann.

Zur Lösung dieser Aufgabe schlägt die Erfindung ausgehend von dem Decoder der eingangs genannten Art vor, daß auf dem Speicherelement ein Zielgruppenschlüssel gespeichert ist, der abhängig ist von dem Zuschauer, und daß bestimmte Werbedatenpakete in Abhängigkeit von dem Zielgruppenschlüssel auswählbar und auf dem Fernsehgerät darstellbar sind.

Gemäß einer vorteilhaften Weiterbildung der Erfindung ist der Zielgruppenschlüssel in Zielgruppenprofile unterteilt. Vorteilhafterweise sind die Zielgruppenprofile in einen öffentlichen Teil und in einen geschützten Teil unterteilt. Vorzugsweise sind in dem öffentlichen Teil datenschutzrechtlich unbedenkliche Angaben über den Zuschauer gespeichert. In dem geschützten Teil sind vorzugsweise datenschutzrechtlich geschützte Angaben über den Zuschauer gespeichert.

Eine bevorzugte Ausführungsform der vorliegenden Erfindung wird im Folgenden anhand der Zeichnung näher erläutert. Es zeigt:

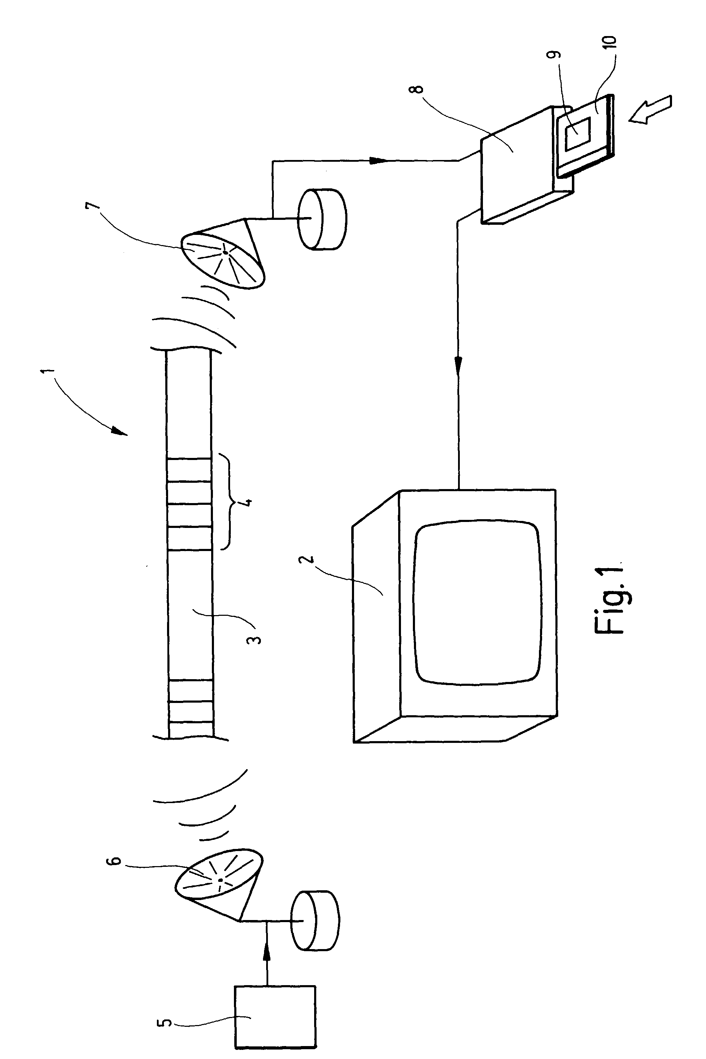

- Fig. 1: ein schematisches Ablaufdiagramm des erfindungsgemäßen Verfahrens gemäß einer bevorzugten Ausführungsform.

Fig. 1 veranschaulicht ein schematisches Ablaufdiagramm eines erfindungsgemäßen Verfahrens zur digitalen Übertragung von komprimierten Fernsehsignalen 1 auf ein Fernsehgerät 2 eines Zuschauers (nicht dargestellt). Bei der Übertragung der Fernsehsignale 1 wechseln sich Informationsdatenpakete 3, die die Daten der eigentlichen Fernsehsendung enthalten, mit Werbedatenpaketen 4 ab, die die Daten einer Werbesendung oder von Werbespots, die während einer Unterbrechung der eigentlichen Fernsehsendung gezeigt werden, enthalten. Die Informationsdatenpakete 3 sind in der Regel wesentlich länger als die Werbedatenpakete 4.

Die Fernsehsignale 1 werden von einer Sendestation 5 über eine Sendeantenne 6 ausgestrahlt. Die ausgestrahlten Fernsehsignale 1 werden von einer Empfangsantenne 7 empfangen. Von der Empfangsantenne 7 werden die empfangenen Fernsehsignale 1 an einen Decoder 8 weitergeleitet. Der Decoder 8 dekomprimiert die Fernsehsignale 1. Falls die Fernsehsignale 1 zusätzlich verschlüsselt übertragen wurden, kann der Decoder 8 die empfangenen Fernsehsignale 1 auch entschlüsseln. Von dem Decoder 8 werden die Fernsehsignale 1 an das Fernsehgerät 2 eines Zuschauers geleitet und dort dargestellt. Alternativ wäre es auch denkbar, daß die Fernsehsignale 1 über ein Fernseh-Kabelnetz (nicht dargestellt) zu dem Zuschauer gelangen.

Die Zuschauer sind in mehrere Zielgruppenschlüssel unterteilt. In dem Ausführungsbeispiel aus Fig. 1 sind die Zuschauer in vier Zielgruppenschlüssel unterteilt, nämlich in "Alleinstehende", "Verheiratete ohne Kinder", "Verheiratete mit jungen Kindern" und "Verheiratete mit älteren Kindern". Die Zielgruppenschlüssel lassen sich beliebig fein in weitere Zielgruppen-Profile unterteilen. Die Zielgruppenschlüssel lassen sich auch in öffentlich zugängliche Inhalte und in vertrauliche Inhalte unterteilen. Die Werbedatenpakete 4 sind jeweils einem bestimmten Zielgruppenschlüssel zugewiesen. Auf dem Fernseher 2 eines Zuschauers werden in den Werbeunterbrechungen nur die Inhalte derjenigen Werbedatenpakete 4 dargestellt, die dem Zielgruppenschlüssel zugewiesen sind, dem der Zuschauer zugeordnet ist. Dadurch kann der auf dem Fernsehgerät 2 des Zuschauers gezeigte Inhalt der Werbedatenpakete 4 gezielt auf die Konsumbedürfnisse des einzelnen Zuschauers abgestimmt werden.

Der Zielgruppenschlüssel kann bspw. über eine Tastatur in den Decoder 8 eingegeben werden. Bei der Ausführungsform aus Fig. 1 ist der Zielgruppenschlüssel auf einem Speicherelement 9 einer Speicherkarte 10 gespeichert. Es wäre denkbar, daß ein Zuschauer beim Kauf eines Decoders 8 auch eine Speicherkarte 10 mit einem bestimmten auf den Zuschauer zugeschnittenen Zielgruppenschlüssel erwirbt. Wenn der Decoder 8 nur bei eingeführter Speicherkarte 10 funktioniert, kann der Decoder 8 dem Zuschauer speziell auf ihn bzw. auf seinen Zielgruppenschlüssel zugeschnittene Werbedatenpakete aussortieren und auf dem Fernsehgerät 1 des Zuschauers darstellen. Dadurch kann die Effizienz der Werbung entscheidend erhöht werden. Den finanziellen Vorteil, den die werbenden Unternehmen von einer effizienteren Werbung haben, können Sie über eine Subvention des Kaufpreises für Decoder 8 zumindest teilweise an die Zuschauer weitergeben.

## Patentansprüche

1. Verfahren zur digitalen Übertragung von komprimierten Fernsehsignalen (1) auf ein Fernsehgerät (2) eines Zuschauers, wobei sich Informationsdatenpakete (3) mit Werbedatenpaketen (4) abwechseln, **dadurch gekennzeichnet,** daß bestimmte Werbedatenpakete (4) in Abhängigkeit von einem Zielgruppenschlüssel, der von dem Zuschauer abhängig ist, ausgewählt und auf dem Fernsehgerät (2) dargestellt werden.

2. Verfahren nach Anspruch 1, **dadurch gekennzeichnet,** daß die Fernsehsignale (1) nach einem Komprimierungsverfahren komprimiert werden, das Packet Identifiers (PIDs) benutzt.

3. Verfahren nach Anspruch 2, dadurch gekennzeichnet, daß die Fernsehsignale (1) nach dem Moving-Picture-Expert-Group-2 (MPEG2)-Verfahren komprimiert werden.

4. Verfahren nach einem der Ansprüche 1 bis 3, dadurch gekennzeichnet, daß der Zielgrupppenschlüssel in einem Decoder (8) zum Dekomprimieren der komprimierten Fernsehsignale (1) eingegeben wird.

5. Verfahren nach Anspruch 4, dadurch gekennzeichnet, daß der Zielgruppenschlüssel von dem Zuschauer über eine Tastatur in den Decoder (8) eingegeben wird.

6. Verfahren nach Anspruch 4, dadurch gekennzeichnet, daß der Zielgruppenschlüssel auf dem Speicherelement (9) einer Speicherkarte (10) gespeichert ist, und der Zielgruppenschlüssel durch Einlesen des Inhalts des Speicherelements (9) in den Decoder (8) eingegeben wird.

7. Decoder (8) zum Dekomprimieren komprimierter Fernsehsignale (1), so daß sie auf einem Fernsehgerät (2) eines Zuschauers darstellbar sind, wobei sich Informationsdatenpakete (3) mit Werbedatenpaketen (4) abwechseln, **dadurch gekennzeichnet,** daß in dem Decoder (8) ein Zielgruppenschlüssel gespeichert ist, der abhängig ist von dem Zuschauer, und daß bestimmte Werbedatenpakete (4) in Abhängigkeit von dem Zielgruppenschlüssel auswählbar und auf dem Fernsehgerät (2) darstellbar sind.

8. Decoder (8) nach Anspruch 7, dadurch gekennzeichnet, daß der Zielgruppenschlüssel in Zielgruppenprofile unterteilt ist.

9. Decoder (8) nach Anspruch 7 oder 8, dadurch gekennzeichnet, daß die Zielgruppenschlüssel in einen öffentlichen Teil und in einen geschützten Teil unterteilt sind.

10. Decoder (8) nach Anspruch 9, dadurch gekennzeichnet, daß in dem öffentlichen Teil datenschutzrechtlich unbedenkliche Angaben über den Zuschauer gespeichert sind.

11. Decoder (8) nach Anspruch 8 oder 9, dadurch gekennzeichnet, daß in dem geschützten Teil datenschutzrechtlich geschützte Angaben über den Zuschauer gespeichert sind.

12. Speicherkarte (10) mit einem Speicherelement (9), für einen Decoder (8) zum Dekomprimieren komprimierter Fernsehsignale (1), so daß sie auf einem Fernsehgerät (2) eines Zuschauers darstellbar sind, wobei sich Informationsdatenpakete (3) mit Werbedatenpaketen (4) abwechseln, **dadurch gekennzeichnet,** daß auf dem Speicherelement (9) ein Zielgruppenschlüssel gespeichert ist, der abhängig ist von dem Zuschauer, und daß bestimmte Werbedatenpakete (4) in Abhängigkeit von dem Zielgruppenschlüssel auswählbar und auf dem Fernsehgerät (1) darstellbar sind.

13. Speicherkarte (10) nach Anspruch 12, dadurch gekennzeichnet, daß der Zielgruppenschlüssel in Zielgruppenprofile unterteilt ist.

14. Speicherkarte (10) nach Anspruch 13, dadurch gekennzeichnet, daß die Zielgruppenprofile in einen öffentlichen Teil und in einen geschützten Teil unterteilt sind.

15. Speicherkarte (10) nach Anspruch 14, dadurch gekennzeichnet, daß in dem öffentlichen Teil datenschutzrechtlich unbedenkliche Angaben über den Zuschauer gespeichert sind.

16. Speicherkarte (10) nach Anspruch 14 oder 15, dadurch gekennzeichnet, daß in dem geschützten Teil datenschutzrechtlich geschützte Angaben über den Zuschauer gespeichert sind.
